# EUROPÄISCHE PATENTSCHRIFT

(11) **EP 3 420 804 B1**
(45) Veröffentlichungstag und Bekanntmachung des Hinweises auf die Patenterteilung: **24.06.2020**
(21) Anmeldenummer: 18176560.3
(22) Anmeldetag: 07.06.2018
(51) Int. Cl.: A01F 12/40, A01D 34/73

(54) **HÄCKSELMESSER FÜR EINEN STROHHÄCKSLER**
CUTTING BLADE FOR A STRAW CHOPPER
LAME DE COUPE POUR UN BROYEUR DE PAILLE

(30) Priorität: 28.06.2017 DE 102017210945
(43) Veröffentlichungstag der Anmeldung: 02.01.2019
(73) Patentinhaber: Deere & Company, Moline, IL 61265 (US)
(72) Erfinder: Klein, Oliver, 68163 Mannheim (DE); Buerrmann, Martin, 68163 Mannheim (DE); Weichholdt, Dirk, 68163 Mannheim (DE)
(74) Vertreter: Holst, Sönke

(56) Entgegenhaltungen:
- EP-A1- 1 588 786
- WO-A1-2012/162352
- US-A- 5 482 508

## Beschreibung

Die Erfindung betrifft ein Häckselmesser für einen Strohhäcksler, das eine Befestigungsöffnung zur Aufnahme eines Befestigungselements zur pendelnden Anbringung des Häckselmessers an einem Rotor des Strohhäckslers, zwei Seitenflächen und an einer oder beiden Enden der Seitenflächen angeordnete Schneiden aufweist, wobei wenigstens eine der Seitenflächen mit Mitteln zur Verminderung des Reibungswiderstandes des Häckselmessers gegenüber der Luft und/oder dem Häckselgut versehen ist, sowie einen damit ausgestatteten Strohhäcksler und einen Mähdrescher.

### Stand der Technik

Mähdrescher dienen zur Ernte von Halmpflanzen, die von einem Feld abgeschnitten und ausgedroschen und separiert werden, um den Kornanteil der Pflanzen abzutrennen. Letzterer wird gereinigt und in einem Korntank gesammelt, um ihn auf ein Transportfahrzeug überzuladen. Die Erntegutreste, d.h. das Stroh der Pflanzen, wird entweder in einem Schwad auf dem Feld abgelegt oder durch einen Strohhäcksler zerkleinert und über die Schnittbreite des Erntevorsatzes über das Feld verteilt.

Gebräuchliche Strohhäcksler umfassen ein Gehäuse mit Gegenmessern und einen darin angeordneten, drehbaren Rotor. An dem Rotor sind an daran angeschweißten Konsolen Häckselmesser paarweise pendelnd gelagert, die zumindest an den vorlaufenden Flächen ein- oder beidseitig angeschliffen und somit mit einer abgeschrägten, eine scharfe (glatte oder gezahnte) Kante bildenden Oberfläche versehen sind (DE 103 32 363 A1, EP 1 588 786 A1) Diese Häckselmesser sind in sich flach. Die EP 1 588 786 A1 zeigt auch eine Ausführungsform, in der Häckselmesser mit Löchern versehen sind, um sie ortsfest am Häckslerrotor zu befestigen oder sie durch Nieten mit anderen Häckselmessern zu koppeln. Im Betrieb sind die Löcher daher geschlossen.

Die WO 2012/162352 A1 zeigt ein Messer für einen Rasenmäher mit Flussanregern in Form von Sacklöchern, die vermeiden sollen, dass sich Rasenpartikel auf dem Messer ansammeln.

Ein in sich flaches Häckselmesser mit einer matt aussehenden Oberfläche und einer quer zwischen den Schneidkanten angeordneten Stufe ist auch in einem Prospekt "Radura Straw Paddlemesser" der Fa. Rasspe (ohne Druckvermerk) dargestellt, der auf der Messe Agritechnica 2011 in Hannover verteilt wurde.

In der EP 0 457 122 A2 wird vorgeschlagen, die Seitenflächen der in sich flachen Häckselmesser zwischen den Schneidkanten mit scharfkantigen Erhebungen auszustatten, die u.a. durch Prägen, Rändeln, Fräsen o. dgl. aufgeraute Oberflächen realisiert werden können. Diese Erhebungen sollen dazu dienen, die Halme des Häckselgutes in Längsrichtung aufzureißen, damit es besser verrotten kann.

Es gibt auch so genannte Paddelmesser für Strohhäcksler (EP 1 491 084 A1), die mit gegenüber der Ebene der Häckselmesser abgewinkelten Flächen versehen sind und größere Luftmengen durch den Strohhäcksler fördern sollen, um die Verteilung der Emtegutreste auf dem Feld und/oder die Entlüftung der Reinigung zu verbessern.

### Aufgabe

Da der Energiebedarf des Strohhäckslers auch von der Aerodynamik des Häckselmessers abhängt, wäre es (insofern keine besondere Luftförderung durch Paddelmesser benötigt wird) wünschenswert, die Häckselmesser möglichst strömungsgünstig auszuführen. Die in sich flachen Häckselmesser nach DE 103 32 363 A1, EP 1 588 786 A1 und dem Prospekt der Fa. Rasspe umfassen mehr oder weniger glatte seitliche Oberflächen, an denen sich strömungsungünstige Wirbel bilden können. Auch die aufgerauten Oberflächen der Häckselmesser nach EP 0 457 122 A1 erzeugen derartige, unerwünschten Wirbel.

Die der Erfindung zu Grunde liegende Aufgabe wird darin gesehen, ein Häckselmesser für einen Strohhäcksler, einen Strohhäcksler und einen Mähdrescher bereitzustellen, wobei sich das Häckselmesser durch einen geringen Reibungswiderstand gegenüber Luft und/oder dem Häckselgut auszeichnet.

### Lösung

Diese Aufgabe wird erfindungsgemäß durch die Lehre der Patentansprüche 1, 3 und 4 gelöst, wobei in den weiteren Patentansprüchen Merkmale aufgeführt sind, die die Lösung in vorteilhafter Weise weiterentwickeln.

Ein Häckselmesser für einen Strohhäcksler umfasst eine Befestigungsöffnung zur Aufnahme eines Befestigungselements zur pendelnden Anbringung des Häckselmessers an einem Rotor des Strohhäckslers, zwei Seitenflächen und an einer oder beiden Enden der Seitenflächen angeordnete Schneiden. Wenigstens eine der Seitenflächen ist mit Mitteln zur Verminderung des Reibungswiderstandes des Häckselmessers gegenüber der Luft und/oder dem Häckselgut versehen.

Die Mittel zur Verminderung des Luftwiderstandes des Häckselmessers weisen eine reibungswiderstandsmindernde Textur auf, welche durch (stumpfe) Erhebungen und dazwischen angeordnete Vertiefungen gebildet werden kann, die sich parallel zu den Schneiden erstrecken oder in sich beiden Richtungen der Seitenflächen untereinander abwechseln. Die Textur kann auch durch parallel zu den Schneiden verlaufende Stufen gebildet werden. Die Stufen können durch übereinander angeordnete Schichten des Häckselmessers mit unterschiedlichen Abmessungen gebildet werden.

### Ausführungsbeispiele

In den Zeichnungen sind vier nachfolgend näher beschriebene Ausführungsbeispiele dargestellt. Es zeigt:
- Fig. 1: eine schematische Seitenansicht eines Mähdreschers mit einem Strohhäcksler,
- Fig. 2: eine seitliche Ansicht des Rotors des Strohhäckslers mit einem daran pendelnd aufgehängten Paar von Häckselmessern,
- Fig. 3: einen Querschnitt durch die Häckselmesser entlang der Linie 3-3 der Figur 2,
- Fig. 4: eine perspektivische Ansicht einer ersten Ausführungsform eines Häckselmessers, die nicht unter die Ansprüche fällt,
- Fig. 5: eine perspektivische Ansicht einer zweiten Ausführungsform eines Häckselmessers,
- Fig. 6: eine perspektivische Ansicht einer dritten Ausführungsform eines Häckselmessers und
- Fig. 7: eine perspektivische Ansicht einer vierten Ausführungsform eines Häckselmessers.

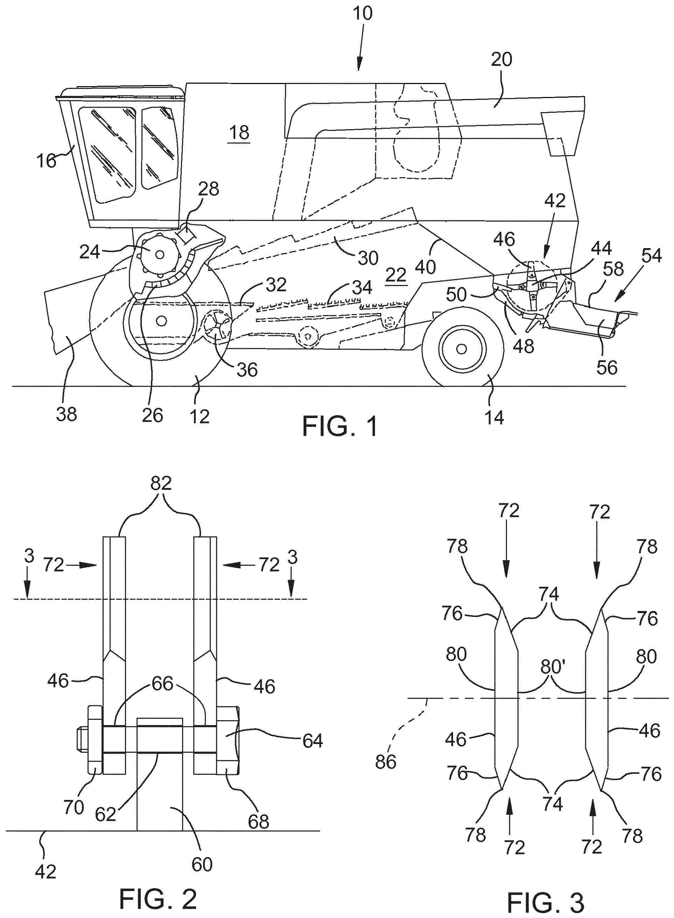

Eine in Figur 1 gezeigte Emtemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine

Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 - ggf. über zusätzliche Kaffstreuer oder durch den Strohhäcksler 42 - ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist. Das gezeigte Tangentialdreschwerk mit der Dreschtrommel 24 und dem Dreschkorb 26 und dem nachfolgenden Strohschüttler 30 ist nur eine mögliche Ausführungsform, die durch einen Axialdresch- und/oder -trennrotor ergänzt oder ersetzt werden könnte.

Der Strohhäcksler 42 umfasst einen hohlzylindrischen Rotor 44 mit um seinen Umfang und über seine Länge verteilten, pendelnd aufgehängten Häckselmessern 46, der mit einem Antrieb derart verbunden ist, dass er in einem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Leiteinrichtungen 56 in Form von Strohleitblechen umfasst, welche unterhalb einer Strohverteilerhaube 58 angeordnet sind. Die Leiteinrichtungen 56 könnten durch angetriebene Strohverteilerteller ersetzt werden.

Anhand der Figur 2 ist erkennbar, dass die Häckselmesser 46 paarweise pendelnd an Halterungen 60 gelagert sind, die am Rotor 44 befestigt sind. Die Halterungen 60 weisen sich in Achsrichtung des Rotors 44 erstreckende Bohrungen 62 auf, durch die sich jeweils ein Bolzen 64 erstreckt. Der Bolzen 64 erstreckt sich auch durch endseitig in den Häckselmessern 46 eingebrachte Befestigungsöffnungen 66 und ist an seinem einem Kopf 68 gegenüberliegenden Ende durch eine Mutter 70 fixiert. Die Durchmesser der Bohrung 62 und der Befestigungsöffnungen 66 sind derart gewählt, dass die Häckselmesser 46 frei pendeln können.

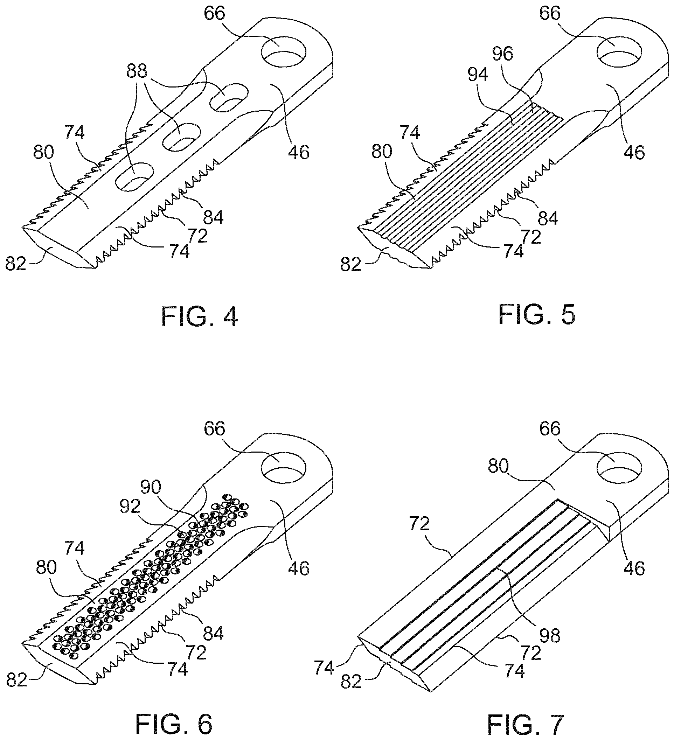

Die Häckselmesser 46 sind allgemein betrachtet als flache Quader geformt, deren längeren Seiten sich von der Befestigungsöffnung 66 in ihrer am Rotor 44 angebrachten Stellung im Betrieb radial nach außen bis zu einem äußeren Ende 82 erstrecken. Die Häckselmesser 46 sind an ihren in der Drehrichtung des Rotors 44 vor- und nachlaufenden Stirnflächen in den dem Rotor 44 abgewandten Bereichen mit Schneiden 72 versehen, die sich in der dargestellten Ausführungsform etwa über 60 % der Länge der Häckselmesser 46 erstrecken, wie in den Figuren 4 bis 6 gezeigt. Zwischen den Schneiden 72 bilden die Häckselmesser 46 in sich flache Seitenflächen 80. Die Schneiden 72 werden durch abgeschrägte Flächen 74 gebildet, die mit einer Verzahnung 84 versehen werden können, die auch entfallen kann. Die abgeschrägten Flächen 74 können jeweils nur auf einer der Seitenflächen 80 (wie in Figur 7) oder beiden Seitenflächen 80 vorgesehen sein (wie in den Figuren 2 bis 6 gezeigt), wobei es beliebig ist, ob die abgeschrägten Flächen 74 auf derselben oder gegenüberliegenden Seitenflächen 80 angeordnet sind, und ob die gemeinsam jeweils eine Schneide 72 bildenden, abgeschrägten Flächen 74 symmetrisch zur Längsmittelebene des Häckselmessers 46 sind oder nicht.

Bei der Ausführungsform nach Figur 4 sind mehrere, durchgehende Löcher 88 in der Seitenfläche 80 vorgesehen. Diese Löcher 88 sind langgestreckten Querschnitts mit kreisförmigen Enden, obwohl sie auch als Kreis, Oval, Drei-, Vier- oder Mehreck oder als Schlitz mit beliebiger Orientierung in der Ebene der Seitenflächen 88 geformt sein könnten. Auch könnten sie als Sacklöcher ausgeführt sein. Die Löcher 88 verringern einerseits die Masse der Häckselmesser 46 und bewirken andererseits eine Verminderung des Reibungswiderstands der Häckselmesser 46 gegenüber der Luft und dem Häckselgut, die und das an den durch die Löcher 88 gebildeten Bereichen der Häckselmesser nicht anhaften können.

Bei der Ausführungsform nach Figur 5 sind die Seitenflächen 88 beidseits mit jeweils benachbarten, wellenförmigen Erhebungen 94 und Vertiefungen 96 ausgestattet, die sich parallel zu den Schneiden 72 erstrecken. Die Erhebungen 94 und Vertiefungen 96 vermindern ebenfalls den Reibungswiderstand der Häckselmesser 46 gegenüber der Luft und dem Häckselgut. Die Erhebungen 94 und Vertiefungen 96 können durch plastisches Verformen der Rohlinge der Häckselmesser 46 durch Fräsen oder mittels einer Presse und eines Stempels erzeugt werden, sei es vor oder nach oder gemeinsam mit dem (groben) Formen der Schneiden 72, dem in der Regel ein Schleifvorgang und ggf. eine Vergütung und/oder Härtung folgt. Aufgrund des Formens der Erhebungen 94 und Vertiefungen 96 können die Erhebungen 94 über die Ebene der nicht mit Erhebungen 94 und Vertiefungen 96 ausgestatteten Bereiche der Seitenflächen 80 hinausragen.

Bei der Ausführungsform nach Figur 6 sind die Seitenflächen 88 beidseits mit jeweils benachbarten, in beiden durch die Ebene der Seitenflächen 88 definierten Richtungen aufeinander folgenden Erhebungen 90 und Vertiefungen 92 ausgestattet, ähnlich wie ein Golfball. Die Erhebungen 90 und Vertiefungen 92 vermindern ebenfalls den Reibungswiderstand der Häckselmesser 46 gegenüber der Luft und dem Häckselgut. Die Erhebungen 90 und Vertiefungen 92 können ebenfalls durch plastisches Verformen der Rohlinge der Häckselmesser 46 mittels einer Presse und eines Stempels erzeugt werden, sei es vor oder nach oder gemeinsam mit dem (groben) Formen der Schneiden 72, dem in der Regel ein Schleifvorgang und ggf. eine Vergütung und/oder Härtung folgt. Aufgrund des Formens der Erhebungen 90 und Vertiefungen 92 können die Erhebungen 94 über die Ebene der nicht mit Erhebungen 94 und Vertiefungen 96 ausgestatteten Bereiche der Seitenflächen 80 hinausragen.

Bei der Ausführungsform nach Figur 7 sind die Seitenflächen 88 beidseits mit kleinen, parallel zu den Schneiden 72 verlaufenden Stufen 94 ausgestattet, ähnlich wie ein japanisches Messer. Die Stufen 94 vermindern ebenfalls den Reibungswiderstand der Häckselmesser 46 gegenüber der Luft und dem Häckselgut. Sie können durch übereinander angeordnete Schichten des Häckselmessers 46 mit unterschiedlichen Abmessungen gebildet werden, oder in die Seitenflächen 80 eingefräst oder durch plastisches Verformen der Rohlinge der Häckselmesser 46 mittels einer Presse und eines Stempels erzeugt werden, sei es vor oder nach oder gemeinsam mit dem (groben) Formen der Schneiden 72, dem in der Regel ein Schleifvorgang und ggf. eine Vergütung und/oder Härtung folgt. Bei der Ausführungsform nach Figur 7 sind die abgeschrägten Flächen jeweils nur an einer Seitenfläche 80 vorgesehen (d.h. nicht an beiden Seitenflächen, wie in den Figuren 4 bis 6, obwohl auch diese Anordnung bei der Ausführungsform nach Figur 7 möglich wäre).

## Patentansprüche

1. Häckselmesser (46) für einen Strohhäcksler (42), das eine Befestigungsöffnung (66) zur Aufnahme eines Befestigungselements zur pendelnden Anbringung des Häckselmessers (46) an einem Rotor (44) des Strohhäckslers (42), zwei Seitenflächen (80, 80') und an einer oder beiden Enden der Seitenflächen (80, 80') angeordnete Schneiden (72) aufweist, wobei wenigstens eine der Seitenflächen (80) mit Mitteln zur Verminderung des Reibungswiderstandes des Häckselmessers (46) gegenüber der Luft und/oder dem Häckselgut versehen ist, **dadurch gekennzeichnet, dass** die Mittel zur Verminderung des Luftwiderstandes des Häckselmessers (46) eine reibungswiderstandsmindernde Textur aufweisen, und dass die Textur durch parallel zu den Schneiden (72) verlaufende Stufen (98) oder parallel zu den Schneiden (72) verlaufende Wellen mit Vertiefungen (96) und Erhebungen (94) oder in beiden durch die Ebene der Seitenflächen (80) definierten Richtungen aufeinander folgende Vertiefungen (92) und Erhebungen (90) gebildet wird.

2. Häckselmesser (46) nach Anspruch 1, wobei die Stufen (94) durch übereinander angeordnete Schichten des Häckselmessers (46) mit unterschiedlichen Abmessungen gebildet werden.

3. Strohhäcksler (42) mit einem Gehäuse (48) und einem darin antreibbar und drehbar angeordneten Rotor (44), an dem Häckselmesser (46) nach einem der vorhergehenden Ansprüche angebracht sind.

4. Mähdrescher (10) mit einem Strohhäcksler (42) nach Anspruch 3.

## Claims

1. Chopping blade (46) for a straw chopper (42), said chopping blade (46) having a fastening opening (66) for receiving a fastening element for attaching the chopping blade (46) in a pendular manner to a rotor (44) of the straw chopper (42), two side faces (80, 80') and cutting edges (72) arranged at one or both ends of the side faces (80, 80'), wherein at least one of the side faces (80) is provided with means for reducing the frictional resistance of the chopping blade (46) with respect to the air and/or the chopping material, **characterized in that** the means for reducing the air resistance of the chopping blade (46) have a texture that reduces frictional resistance, and **in that** the texture is formed by steps (98) extending parallel to the cutting edges (72) or waves extending parallel to the cutting edges (72) with recesses (96) and elevations (94) or recesses (92) and elevations (90) that follow one another in both directions defined by the plane of the side faces (80).

2. Chopping blade (46) according to Claim 1, wherein the steps (94) are formed by layers, arranged one on top of another, of the chopping blade (46) with different dimensions.

3. Straw chopper (42) having a housing (48) and a rotor (44) arranged therein in a drivable and rotatable manner, chopping blades (46) according to one of the preceding claims being attached to said rotor (44).

4. Combine harvester (10) having a straw chopper (42) according to Claim 3.

## Revendications

1. Lame de coupe (46) pour un hache-paille (42), présentant une ouverture de fixation (66) pour recevoir un élément de fixation pour le montage pendulaire de la lame de coupe (46) sur un rotor (44) du hache-paille (42), deux surfaces latérales (80, 80') et des tranchants (72) disposés au niveau d'une ou des deux extrémités des surfaces latérales (80, 80'), au moins l'une des surfaces latérales (80) étant pourvue de moyens pour réduire la résistance au frottement de la lame de coupe (46) par rapport à l'air et/ou par rapport au produit à hacher, **caractérisée en ce que** les moyens pour réduire la résistance de l'air de la lame de coupe (46) présentent une texture réduisant la résistance au frottement et **en ce que** la texture est formée par des gradins (98) s'étendant parallèlement aux tranchants (72) ou par des ondulations s'étendant parallèlement aux tranchants (72), avec des renfoncements (96) et des rehaussements (94), ou par des renfoncements (92) et des rehaussements (90) se suivant dans les deux directions définies par le plan des surfaces latérales (80).

2. Lame de coupe (46) selon la revendication 1, dans laquelle les gradins (94) sont formés par des couches superposées de la lame de coupe (46) ayant des dimensions différentes.

3. Hache-paille (42) comprenant un boîtier (48) et un rotor (44) disposé de manière à pouvoir être entraîné et tourné dans celui-ci, sur lequel sont montées des lames de coupe (46) selon l'une quelconque des revendications précédentes.

4. Moissonneuse-batteuse (10) comprenant un hache-paille (42) selon la revendication 3.
